# EUROPÄISCHE PATENTSCHRIFT

(11) **EP 1 019 194 B1**
(45) Veröffentlichungstag und Bekanntmachung des Hinweises auf die Patenterteilung: **16.10.2002**
(21) Anmeldenummer: 98950031.9
(22) Anmeldetag: 14.09.1998
(51) Int. Cl.: B01L 3/02, G01F 11/02

(54) **REPETIERPIPETTE MIT EINER HYDRAULISCHEN BETÄTIGUNGSEINRICHTUNG**
REPEATER PIPETTE WITH A HYDRAULIC OPERATING DEVICE
PIPETTE A REPETITION POURVUE D'UN DISPOSITIF D'ACTIONNEMENT HYDRAULIQUE

(30) Priorität: 02.10.1997 DE 19743660
(43) Veröffentlichungstag der Anmeldung: 19.07.2000
(73) Patentinhaber: EPPENDORF AG, 22339 Hamburg (DE)
(72) Erfinder: BLUM, Roger, D-20255 Hamburg (DE); HOFMEIER, Gerhard, D-22399 Hamburg (DE); HUHN, Rüdiger, D-22339 Hamburg (DE)
(74) Vertreter: Siemons, Norbert, Dr.-Ing.
(86) Internationale Anmeldenummer: EP9805827
(87) Internationale Veröffentlichungsnummer: WO99017880

(56) Entgegenhaltungen:
- DE-A- 2 926 691
- FR-A- 2 447 216
- FR-A- 2 495 317
- US-A- 5 672 320

## Beschreibung

Die Erfindung betrifft ein Pipettiersystem mit einer Repetierpipette und einer damit lösbar verbundenen Spritze.

Pipettiersysteme der eingangs genannten Art dienen der Dosierung bestimmter Flüssigkeitsmengen (z.B. Reagenzien) und kommen insbesondere im Labor zum Einsatz. Die Repetierpipette dient der Halterung und Betätigung der Spritze, um in diese Flüssigkeit einzusaugen und aus dieser abzugeben. Die Spritze kann nach Gebrauch gegen eine saubere Spritze ausgetauscht und weggeworfen werden. Das Einsaugen in die Spritze erfolgt in der Regel in nur einem Schritt, wogegen das Abgeben bestimmter Dosiermengen in mehreren Schritten möglich ist. Pipettiersysteme mit einstellbarer Dosiermenge sind bereits bekannt.

So offenbart die DE 29 26 691 C2 eine Repetierpipette, die eine Zahnstangen-Klinkeneinrichtung zur schrittweisen Kolbenvorbewegung durch einen hin- und herbewegbaren Antriebshebel hat. Ferner ist an der Zahnstange eine einstellbar verschiebbare Abdeckung zur Beschränkung des wirksamen Klinkeneingriffs zum Kolbenvortrieb vorgesehen. Die Abdeckung kann durch ein im Pipettengehäuse angeordnetes Stellglied verlagerbar sein, das mit einem Drehknopf ausgeführt sein kann. Bei diesem Pipettiersystem ist die Dosiermenge nur in Schritten einstellbar, deren Feinheit durch die Teilung der Zahnstange begrenzt ist.

Aus den folgenden Druckschriften sind Pipettiersysteme bekannt, die hydraulische Betätigungseinrichtungen im weitesten Sinne aufweisen: DE 40 11 584 A1, DE 42 14 430 A1, DE 25 58 672 A1, US 5 456 885, JP 63-169 565 A, JP 4-161 856 A, Measurement Techniques Vol. 1987, H. 1, S. 51-53.

Davon ausgehend liegt der Erfindung die Aufgabe zugrunde, ein Pipettiersystem der eingangs erwähnten Art zu schaffen, das eine kontinuierliche Änderung der Dosiermenge ermöglicht.

Die Aufgabe wird durch ein Pipettiersystem mit den Merkmalen des Anspruches 1 gelöst. Vorteilhafte Ausgestaltungen des Pipettiersystems sind in den Unteransprüchen angegeben.

Das erfindungsgemäße Pipettiersystem hat eine Repetierpipette und eine damit lösbar verbundene Spritze, wobei die Repetierpipette die Spritze hält und Einrichtungen zum Rückschieben des Spritzenkolbens von der Spritzenöffnung weg und zum Vorschieben des Spritzenkolbens zur Spritzenöffnung hin in Schritten entsprechend von der Spritze auszustoßender Flüssigkeitsvolumina aufweist. Die Repetierpipette kann die Spritze an einem Befestigungsabschnitt des Spritzenzylinders halten und die Einrichtungen zum Rückschieben und Vorschieben können den Spritzenkolben relativ zum festgehaltenen Zylinder verschieben. Die Einrichtungen weisen eine Arbeitskammer und eine Vorratskammer auf, die mit Hydraulikflüssigkeit befüllt sind. In die Arbeitskammer sind ein mit dem Spritzenkolben verbundener Arbeitskolben und ein Betätigungskolben abdichtend hineingeführt, wobei der Betätigungskolben ein von außen betätigbares Betätigungsende aufweist. Der Arbeitskolben kann unmittelbar oder mittelbar mit dem Spritzenkolben verbunden sein und das Betätigungsende kann unmittelbar oder mittelbar von außen betätigbar sein. Die Vorratskammer weist ein veränderliches Vorratsvolumen auf. Dieses kann aufgrund eines abdichtend und verschieblich in die Vorratskammer hineingeführten Ausgleichskolbens und/oder aufgrund einer flexiblen Vorratskammerwand veränderlich sein. Ferner weist die Verbindung von Arbeitskammer und Vorratskammer eine Ventileinrichtung auf, die beim Einschieben des Arbeitskolbens in die Arbeitskammer, insbesondere beim Rückschieben des Spritzenkolbens, Hydraulikflüssigkeit aus der Arbeitskammer in die Vorratskammer durchläßt. Infolgedessen wird das beim Einschieben vom Arbeitskolben verdrängte Flüssigkeitsvolumen von dem veränderlichen Vorratsvolumen der Vorratskammer aufgefangen. Dies ermöglicht das Aufziehen von Flüssigkeit in die Spritze und/oder das Einstellen des Arbeitskolbens in eine Ausgangsposition für Flüssigkeitsabgabe. Ferner trennt die Ventileinrichtung beim Einschieben des Betätigungskolbens in die Arbeitskammer diese von der Vorratskammer ab, damit die Hydraulikflüssigkeit den Arbeitskolben zum Vorschieben des Spritzenkolbens um einen Schritt aus der Arbeitskammer herausdrückt. Das Abtrennen der Arbeitskammer von der Vorratskammer verhindert, daß die vom Betätigungskolben verdrängte Flüssigkeitsmenge vom veränderlichen Vorratsvolumen aufgenommen wird, ohne den Arbeitskolben herauszudrücken. Beim Rückschieben des Betätigungskolbens aus der Arbeitskammer läßt jedoch die Ventileinrichtung Hydraulikflüssigkeit aus der Vorratskammer in die Arbeitskammer zum Nachfüllen hinüber. Hierdurch wird eine dem Herausschieben des Arbeitskolbens aus der Arbeitskammer entsprechende Menge Hydraulikflüssigkeit ersetzt, so daß der Arbeitskolben bei der nächsten Betätigung des Betätigungskolbens um einen weiteren Schritt herausgedrückt wird.

Die von der Spritze abgegebene Flüssigkeitsmenge hängt von der Strecke ab, die der Betätigungskolben in die Arbeitskammer eingeschoben wird. Die Dosiermenge ist somit stufenlos veränderbar. Vorzugsweise ist der Betätigungskolben zwischen einem das Rückschieben begrenzenden ersten Anschlag und einem das Einschieben begrenzenden zweiten Anschlag bewegbar, wodurch Bezugspunkte für die Dosiermenge geschaffen werden. Bei Bewegung des Betätigungskolbens von Anschlag zu Anschlag ist die Dosiermenge genau definiert. Weiterhin vorzugsweise ist der Abstand zwischen dem ersten und dem zweiten Anschlag mittels einer Einstelleinrichtung einstellbar. Hierdurch wird auch die durch Bewegen des Betätigungskolbens von Anschlag zu Anschlag erreichte Dosiermenge eingestellt. Die Einstelleinrichtung kann eine Mikrometereinrichtung aufweisen und kann mit einer Anzeigeeinrichtung für die Dosierungsmenge gekoppelt sein. Vorzugsweise wird der Betätigungskolben von einer Feder in Rückschieberichtung beaufschlagt, so daß er sich nach Betätigung selbsttätig in eine Ausgangsposition für einen weiteren Dosierschritt zurückstellt.

Die Ventileinrichtung kann ein Rückschlagventil aufweisen, das bei Strömungsrichtung von der Vorratskammer in die Arbeitskammer öffnet und in umgekehrter Richtung schließt. Das Rückschlagventil bewirkt automatisch die Trennung von Vorratskammer und Arbeitskammer beim Einschieben des Betätigungskolbens in die Arbeitskammer und hebt die Trennung automatisch auf, wenn der Betätigungskolben herausgezogen wird. Für das Durchlassen von Hydraulikflüssigkeit beim Einschieben des Arbeitskolbens kann das Rückschlagventil zudem von außen betätigbar sein. Statt eines aktiven Rückschlagventils kann auch ein zusätzliches, von außen betätigbares Ventil zwischen Arbeitskammer und Vorratskammer vorhanden sein.

Ein Rückfedern einer Dichtlippe des Spritzenkolbens kann nach einem Dosierschritt dazu führen, daß die Spritze eine geringe Flüssigkeitsmenge zurücksaugt. Zur Vermeidung eines Dosierfehlers kann eine erste und eine zweite Arbeitskammer vorhanden sein, wobei der Arbeitskolben der ersten Arbeitskammer zugeordnet ist und über ein Ventil der Ventileinrichtung mit der Vorratskammer verbunden ist, das beim Einschieben des Arbeitskolbens in die erste Arbeitskammer geöffnet werden kann. Ferner kann die zweite Arbeitskammer den Betätigungskolben zugeordnet haben und über ein Ventil der Ventileinrichtung mit der Vorratskammer verbunden sein, das diese beim Einschieben des Betätigungskolbens von der zweiten Arbeitskammer trennt und beim Rückschieben des Betätigungskolbens mit der zweiten Arbeitskammer verbindet. Das weitere Ventil kann ein Rückschlagventil sein. Die Arbeitskammern sind untereinander durch eine weitere Ventileinrichtung verbunden, die am Ende der Vorwärtsbewegung des Betätigungskolbens schließt. Die weitere Ventileinrichtung kann ein weiteres Rückschlagventil sein, das in Strömungsrichtung von der zweiten Arbeitskammer zur ersten Arbeitskammer öffnet und in umgekehrter Richtung schließt. Wird dann der Betätigungskolben entlastet und zurückgezogen, so wird dennoch der Arbeitskolben nicht entlastet, sondern wird durch das Schließen der zweiten Ventileinrichtung in der ersten Arbeitskammer unter Spannung gehalten, ebenso wie der Spritzenkolben. Andererseits füllt sich die zweite Arbeitskammer beim Zurückziehen des Betätigungskolbens mit der erforderlichen Menge Hydraulikflüssigkeit. Dieses Volumen wird bei der nächsten Betätigung durch die weitere Ventileinrichtung in die erste Arbeitskammer gedrückt, so daß die Spritze jedesmal die richtige Dosiermenge abgibt.

Ferner kann eine Einrichtung zur Resthubvermeidung vorhanden sein, die einen weiteren Dosierschritt verhindert, wenn die in der Spritze vorhandene Restmenge kleiner als die Dosiermenge ist. Hierzu kann die Einrichtung zur Resthubvermeidung eine Einrichtung zum Abtasten der Stellung des Arbeitskolbens beim Rückschieben des Betätigungskolbens aufweisen und eine Einrichtung zum Vergleichen des ermittelten Resthubes und der Dosiermenge haben sowie eine Einrichtung zum Sperren eines weiteren Herausschiebens des Arbeitskolbens bei unzureichendem Resthub. Durch Abtasten der Stellung des Arbeitskolbens erst bei jeder Rückbewegung des Betätigungskolbens wird erreicht, daß die letzte mögliche Dosierung noch vollständig durchgeführt werden kann. Durch das Sperren der weiteren Bewegung des Arbeitskolbens wird erreicht, daß die nächste Dosierung nicht mehr angefangen werden kann. Vorzugsweise ist zudem das Sperren der weiteren Bewegung des Arbeitskolbens durch die Einrichtung zur Resthubvermeidung mit der Einstellung der Einstelleinrichtung gekoppelt, so daß dann die jeweils eingestellte Dosiermenge berücksichtigt wird. Weiterhin vorzugsweise wird bei Wirksamwerden der Resthubvermeidung der Betätigungskolben nicht gesperrt, sondern ist dessen Betätigung ohne Verschiebung des Arbeitskolbens möglich.

Durch zwischenzeitliche Entlastung des Betätigungskolbens könnten undefinierte Dosiermengen abgegeben werden. Deshalb ist bei einer weiteren Ausgestaltung eine Einrichtung zur Sicherung des Herausschiebens des Arbeitskolbens aus der Arbeitskammer vorhanden, die eine Rückbewegung des Betätigungskolbens und/oder ein Öffnen der Ventileinrichtung vor Abschluß des Dosierschrittes verhindert. Dabei kann die Einrichtung zur Sicherung das Erreichen des zweiten Anschlages durch den Betätigungskolben abtasten, das ein Indikator für den vollständigen Abschluß des Dosierschrittes ist.

Das Pipettiersystem wird nachfolgend anhand der anliegenden Zeichnungen einiger Ausführungsbeispiele näher erläutert. In den Zeichnungen zeigen:
- Fig. 1: eine Grundausführung des Pipettiersystems in grobschematischer Darstellung;
- Fig. 2: eine Ausgestaltung des Details II der Fig. 1 in vergrößerter, grobschematischer Darstellung;
- Fig. 3: ein Pipettiersystem mit Fehlerunterdrückung aufgrund Spritzenelastizität, Resthubsperre und Vollhubsicherung in grobschematischer Darstellung.

Bei der nachfolgenden Erörterung verschiedener Pipettiersysteme sind entsprechende Elemente derselben mit übereinstimmenden Bezugsziffern bezeichnet.

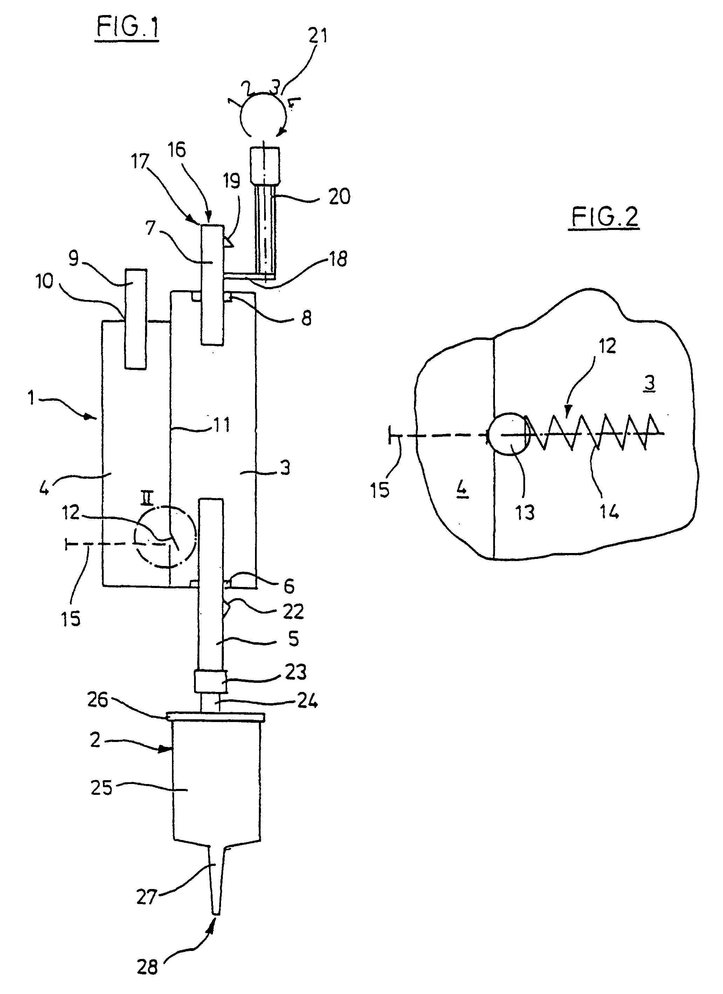

Das Pipettiersystem gemäß Fig. 1 hat eine Repetierpipette 1 und eine Spritze 2.

Die Repetierpipette 1 hat eine Arbeitskammer 3 und eine Vorratskammer 4, die vollständig mit einem Hydraulikmedium gefüllt sind, beispielsweise einem Hydrauliköl oder Wasser.

In die Arbeitskammer 3 ragt von außen teilweise ein Arbeitskolben 5 hinein, der abdichtend durch eine Dichtung 6 in einer Stirnwand der Arbeitskammer geführt ist. Auf der gegenüberliegenden Seite ragt von außen teilweise ein Betätigungskolben 7 hinein, der ebenfalls abdichtend durch eine Dichtung 8 der Arbeitskammerwand geführt ist.

In die Vorratskammer 4 ragt von außen teilweise ein Ausgleichskolben 9 hinein, der abdichtend durch eine Dichtung 10 in der Vorratskammerwand geführt ist.

In einer gemeinsamen Trennwand 11 haben Arbeitskammer 3 und Vorratskammer 4 eine Ventileinrichtung 12. Diese ist als Kugelrückschlagventil mit einer Kugel 13 und einer Spiralfeder 14 ausgestaltet. Das Rückschlagventil 12 öffnet in Strömungsrichtung von der Vorratskammer 4 zur Arbeitskammer 3 und schließt in umgekehrter Richtung. Außerdem kann es mittels eines Stiftes 15 von außen geöffnet werden.

Das aus der Arbeitskammer 3 herausragende Ende des Betätigungskolbens 7 ist als Betätigungsknopf 16 ausgeführt. Außerdem ist der Betätigungskolben 7 zwischen einem fest mit der Repetierpipette 1 verbundenen, ersten Anschlag 17 und einem zweiten Anschlag 18 verschieblich, auf den er mit einem Vorsprung 19 trifft. Die Position des Anschlages 18 in Verschieberichtung des Betätigungskolbens 7 ist mittels einer Mikrometerschraube 20 einstellbar, der eine Anzeige 21 zugeordnet ist.

Der Arbeitskolben 5 ist an dem aus der Arbeitskammer 3 herausragenden Teil mit einem Rückbewegungshebel 22 versehen.

Außerdem ist der herausragende Teil des Arbeitskolbens 5 über eine lösbare Kupplung 23 mit dem Spritzenkolben 24 der Spritze 2 verbunden. Der Spritzenzylinder 25 der Spritze 2 ist mit einem Befestigungsflansch 26 lösbar in eine - nicht gezeigte - Aufnahme der Pipette 1 eingesetzt. Anderenends hat der Spritzenzylinder 25 eine Abgabespitze 27, in der die Spritzenöffnung 28 ausgebildet ist.

### Das Pipettiersystem arbeitet wie folgt:

Zunächst wird die Repetierpipette 1 mit der Spritze 2 verbunden, wobei der Arbeitskolben 5 bei 23 mit dem Spritzenkolben 24 gekoppelt wird. Dann wird zum Einsaugen von Flüssigkeit in die Spritze 2 der Spritzenkolben 24 herausgezogen, indem der Arbeitskolben 5 durch Betätigen des Rückbewegungshebels 22 in die Arbeitskammer 3 eingeschoben wird. Hierbei ist die Ventileinrichtung 12 durch Betätigen des Stiftes 15 geöffnet, so daß die vom Arbeitskolben 5 verdrängte Flüssigkeit in die Vorratskammer 4 überströmt und den Ausgleichskolben 9 entsprechend herausdrückt. Nach Auffüllen der Spritze 2 wird der Stift 15 entlastet und die Ventileinrichtung 12 schließt die Arbeitskammer 3 gegenüber der Vorratskammer 4 ab. Wenn eine befüllte Spritze 2 angeschlossen wird, kann der Arbeitskolben 5 vorher eingeschoben werden.

Femer wird die auszugebende Dosiermenge mittels der Mikrometerschraube 20 und der Anzeigeeinrichtung 21 eingestellt. Das Pipettiersystem ermöglicht die Einstellung beliebiger Dosiermengen innerhalb der durch die Entfernbarkeit der Anschläge 17, 18 gegebenen Grenzen. Für die Abgabe der eingestellten Menge wird der Betätigungskolben 7 von seiner Ausgangsstellung am ersten Anschlag 17 bis zum zweiten Anschlag 18 bewegt. Die vom Betätigungskolben 7 verdrängte Flüssigkeit drückt den Arbeitskolben 5 entsprechend aus der Arbeitskammer 3 heraus, denn die Ventileinrichtung 12 ist geschlossen. Der dabei zurückgelegte Weg des Arbeitskolbens 5 entspricht dem Abstand zwischen den Anschlägen 17, 18 multipliziert mit dem Verhältnis der Durchmesser von Betätigungskolben 7 und Arbeitskolben 5. Dementsprechend wird vom Spritzenkolben 24 Flüssigkeit aus der Spritzenöffnung 28 herausgedrückt.

Für einen weiteren Betätigungsschritt muß der Betätigungskolben 7 gegen den ersten Anschlag 17 zurückgezogen werden, was selbsttätig durch eine ― nicht gezeigte ― Feder geschehen kann. Beim Zurückziehen öffnet selbsttätig das Rückschlagventil 12 und aus der Vorratskammer 4 strömt Hydraulikflüssigkeit in die Arbeitskammer 3 nach, um das vom Betätigungskolben 7 freigegebene Volumen zu ersetzen. Unabhängig von diesem Ausführungsbeispiel darf die Ventileinrichtung 12 nur so viel Flüssigkeitsschlupf zulassen, daß die Grenzen für Präzision und Richtigkeit des Dosiersystems eingehalten werden. Wenn der Betätigungskolben 7 den ersten Anschlag 17 erreicht, ist das Pipettiersystem für einen weiteren Dispensiervorgang bereit.

Der Ablauf kann mehrfach wiederholt werden, bis der Spritzenkolben 24 vollständig eingedrückt ist oder bis eine am Arbeitskolben 5 angreifende Resthubsperre verhindert, daß ein die eingestellte Dosiermenge unterschreitendes Restvolumen abgegeben wird.

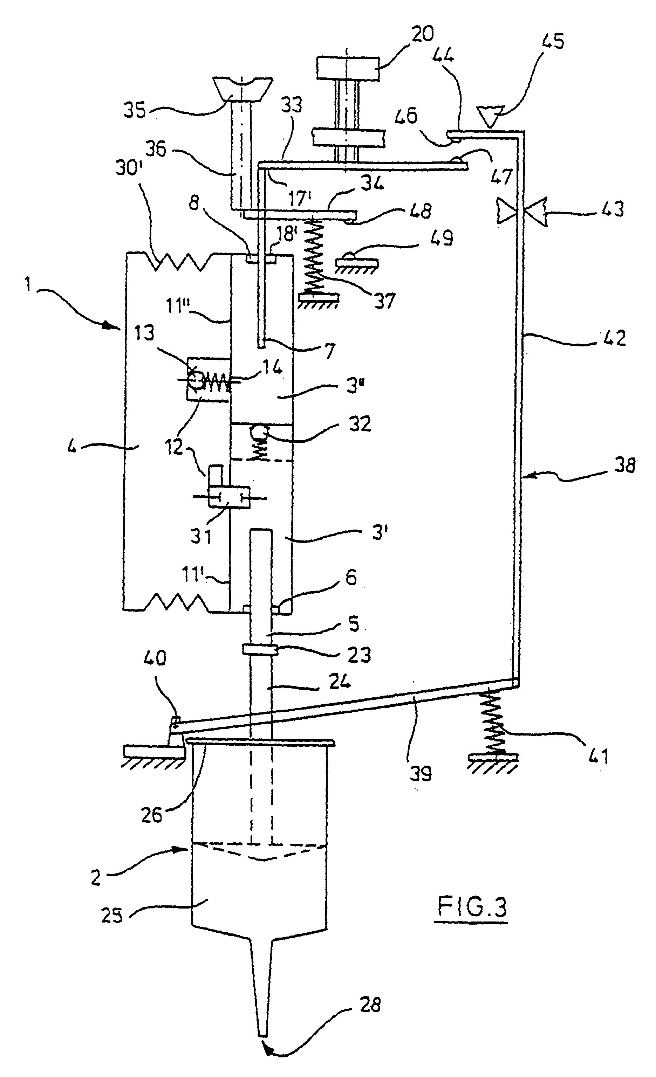

Das Pipettiersystem gemäß Fig. 3 weist eine erste Arbeitskammer 3' und eine zweite Arbeitskammer 3" auf. In die erste Arbeitskammer 3' ist der Arbeitskolben 5 durch die Dichtung 6 hineingeführt. In die zweite Arbeitskammer 3" ist der Betätigungskolben 7 durch die Dichtung 8 hineingeführt.

Neben der ersten und der zweiten Arbeitskammer 3', 3" befindet sich eine Vorratskammer 4, deren Vorratskammerwand 30' als Faltenbalg ausgeführt ist. In der gemeinsamen Trennwand 11" mit der zweiten Arbeitskammer 3" ist ein Kugelrückschlagventil 13, 14 angeordnet, das zu einer Ventileinrichtung 12 gehört und in Strömungsrichtung von der Vorratskammer 4 zur zweiten Arbeitskammer 3" öffnet und in umgekehrter Richtung schließt.

In der gemeinsamen Trennwand 11' der Vorratskammer 4 mit der Arbeitskammer 3' ist ein von außen betätigbares Ventil 31 angeordnet, das ebenfalls zur Ventileinrichtung 12 gehört und in beiderlei Richtungen Flüssigkeit durchlassen kann.

Zwischen der zweiten Arbeitskammer 3" und der ersten Arbeitskammer 3' ist eine weitere Ventileinrichtung 32 in Form eines Kugelrückschlagventiles angeordnet, die in Strömungsrichtung von der zweiten zur ersten Arbeitskammer öffnet und in umgekehrter Richtung schließt.

Der Betätigungskolben 7 stößt mit seinem aus der zweiten Arbeitskammer 3" herausragenden Ende gegen einen ersten Anschlag 17', der von der Unterseite einer Platte 33 gebildet ist, die mittels einer Mikrometerschraube 20 in Axialrichtung des Betätigungskolbens verstellbar ist. Am herausragenden Teil des Betätigungskolbens 7 ist eine weitere, beidseitig überstehende Platte 34 fixiert. Der Betätigungsweg des Betätigungskolbens 7 wird durch Anschlagen der weiteren Platte 34 gegen die benachbarte Stirnwand der Arbeitskammer 3" begrenzt, die einen feststehenden Anschlag 18' bildet.

Auf den kurzen überstehenden Schenkel der weiteren Platte 34 wirkt ein Betätigungsknopf 35 mit einem Zapfen 36. Auf den anderen Schenkel wirkt in entgegengesetzter Richtung eine in der Repetierpipette 1 abgestützte Schraubenfeder 37.

Die Spritze 2 ist mit dem Spritzenflansch 26 ihres Spritzenzylinders 25 in der Repetierpipette 1 gehalten und mit ihrem Spritzenkolben 24 mit dem Arbeitskolben 5 mit einer Kupplung 23 verbunden, so daß sie nach Gebrauch gelöst werden kann.

Ferner hat die Repetierpipette 1 ein Gestänge 38. Dieses weist einen ersten Gelenkstab 39 auf, der in einem festen Lager 40 in der Repetierpipette 1 schwenkbar gelagert ist und sich quer am Spritzenkolben 24 vorbei so erstreckt, daß die Kupplung 23 (oder ein besonderer Flansch) gegen Ende der Vorschiebebewegung des Spritzenkolbens 24 gegen die Oberseite des Gelenkstabes 39 drückt. Dieser ist jedoch mittels einer Schraubenfeder 41 in Richtung des Arbeitskolbens 5 vorbelastet.

An der dem Lager 40 gegenüberliegenden Seite des Spritzenkolbens 24 ist der Gelenkstab 39 gelenkig mit einem Übertragungsstab 42 verbunden, der mit einer Führung 43 in der Repetierpipette 1 geführt ist und eine Abwinklung 44 in Richtung Mikrometerschraube 20 aufweist. Von der Feder 41 wird das Gestänge 38 mit der Abwinklung 44 gegen einen ortsfesten Anschlag 45 in der Repetierpipette 1 gedrückt.

Die Abwinklung 44 hat an der Seite, die der Wirkungsrichtung der Feder 41 entgegengerichtet ist, einen elektrischen Kontakt 46. Diesem ist ein elektrischer Kontakt 47 der Platte 33 zugeordnet. Die beiden Kontakte 46, 47 berühren einander, wenn der Gelenkstab 39 entgegen der Wirkung der Feder 41 geschwenkt und der Übertragungsstab 42 entsprechend nach unten gezogen wird.

Schließlich gibt es noch einen elektrischen Kontakt 48 an der der Wirkungsrichtung der Feder 37 entgegengesetzt gerichteten Seite der Platte 34. Diesem ist ein elektrischer Kontakt 49 ortsfest in der Repetierpipette 1 zugeordnet.

### Dieses Pipettiersystem funktioniert wie folgt:

Zunächst werden Repetierpipette 1 und Spritze 2 miteinander verbunden. Dann wird der Arbeitskolben 5 in die erste Arbeitskammer 3' eingeschoben, wobei das Ventil 31 geöffnet wird, damit Hydraulikflüssigkeit aus der ersten Arbeitskammer 3' in die Vorratskammer 4 überströmen kann, wo die Volumenzunahme durch den Faltbalg 30' kompensiert wird.

Zum stufenlosen Einstellen der zu dosierenden Flüssigkeitsmenge wird die Mikrometerschraube 20 benutzt. Diese verschiebt den ersten Anschlag 17', wodurch der Anfang der Bewegungsstrecke des Betätigungskolbens 7 festgelegt wird, dessen Ende von dem festen Anschlag 18' bestimmt ist. Diese Verschiebung ist mit Verdrängung von Hydraulikflüssigkeit aus der zweiten Arbeitskammer 3" über die weitere Ventileinrichtung 32 in die erste Arbeitskammer 3' verbunden, die durch Öffnen des Ventils 31 ausgeglichen werden kann, wenn der Arbeitskolben 5 nicht unbeabsichtigt vorgeschoben werden soll. Natürlich kann die Volurneneinstellung auch ohne Öffnen des Ventils 31 vor dem Rückschieben des Arbeitskolbens 5 erfolgen.

Wenn der Betätigungsknopf 35 gedrückt wird, wird der Betätigungskolben 7 entsprechend der Volumeneinstellung in die zweite Arbeitskammer 3" eingeschoben und eine entsprechende Flüssigkeitsmenge tritt durch die weitere Ventileinrichtung 32 in die erste Arbeitskammer 3' über und schiebt dort wiederum entsprechend den Arbeitskolben 5 vor, der über den Spritzenkolben 24 die gewünschte Flüssigkeitsmenge ausdrückt. Nach Abschluß des Betätigungshubes schließt die weitere Ventileinrichtung 32 und Betätigungskolben 7 und Betätigungsknopf 35 kehren unter dem Einfluß der Feder 37 in ihren Ausgangslage zurück. Das vom Betätigungskolben 7 freigemachte Volumen wird dabei durch das Rückschlagventil 13. 14 aus der Vorratskammer 4 ersetzt. Wichtig ist, daß die weitere Ventileinrichtung 32 am Ende der Vorwärtsbewegung des Betätigungskolbens 7 schließt, so daß der Arbeitskolben 5 dann ebenso wie der Spritzenkolben 24 bei der Rückbewegung des Betätigungskolbens 7 nicht entlastet wird, so daß in der Spritze keine elastischen Rückverformungseffekte eintreten.

Wenn der Betätigungskolben 7 den ersten Anschlag 17' erreicht hat, kann eine weitere Flüssigkeitsmenge dispensiert werden.

Wenn schließlich bei einem Dosierschritt die Kupplung 23 den Gelenkstab 39 vorschiebt, gelangen die Kontakte 46, 47 in Berührung. Hierdurch wird indiziert, daß die noch in der Spritze 2 vorliegende Restflüssigkeitsmenge der eingestellten Dosiermenge nicht mehr entspricht. Die eingestellte Dosiermenge wird dabei über die Einstellung des Kontaktes 47 mittels der Mikrometerschraube 20 berücksichtigt.

Die Ermittlung einer unzureichenden Restflüssigkeitsmenge für einen weiteren Dispensierschritt darf jedoch nicht zum Abbruch eines laufenden Dosierschrittes führen. Deshalb wird die Beendigung der Dosierschritte mittels der Kontakte 48, 49 festgestellt. Weitere Dosierungen werden nach einer Kontaktierung von 46 und 47 erst unterdrückt, wenn auch die Kontakte 48, 49 einander berührt haben. Damit werden Fehlpipettierungen beim Schalten der Kontakte 46, 47 während der letzten Pipettierung vermieden. Die Auswertung erfolgt elektrisch und führt zu einer Öffnung des (z.B. elektrisch steuerbaren) Ventils 31. Danach kann der Betätigungsknopf 35 zwar noch betätigt werden, wird jedoch die dadurch verschobene Hydraulikflüssigkeit in die Vorratskammer 4 abgeleitet, ohne eine Vorschub des Arbeitskolbens 5 zu bewirken.

Die gleiche Funktion ist auch mit einer rein mechanischen Konstruktion erreichbar.

Schließlich hat diese Pipettiervorrichtung noch eine Sicherung gegen die Pipettierung von undefinierten Volumina durch zwischenzeitliche Entlastung des Betätigungsknopfes 35 während des Pipettierens. Dafür kann der Betätigungskolben 7 eine rein mechanische Rücklaufsperre aufweisen, die erst beim Erreichen des zweiten Anschlages 18' gelöst wird. Bei einer anderen Lösung kann das Rückschlagventil 13, 14 von außen solange abgesperrt werden, bis der zweite Anschlag 18' erreicht wird. Das kann beispielsweise elektrisch geschehen, indem die Berührung der Kontakte 48, 49 festgestellt und das Rückschlagventil 13, 14 bis zur Berührung gesperrt wird. Durch dieses Sperren wird verhindert, daß Hydraulikflüssigkeit aus der Vorratskammer 4 in die zweite Arbeitskammer 3" bei dem Versuch eines Herausziehens des Betätigungskolbens 7 nachgesaugt wird und das bei der nachfolgenden Betätigung bis zum zweiten Anschlag 18' abgegebene Volumen fälschlich erhöht.

## Patentansprüche

1. Pipettiersystem mit
- einer Repetierpipette (1)
- und einer damit lösbar verbundenen Spritze (2),
- wobei die Repetierpipette (1) die Spritze (2) hält,
- und mit Einrichtungen zum Rückschieben des Spritzenkolbens (24) von der Spritzenöffnung (28) weg und zum Vorschieben des Spritzenkolbens (24) zur Spritzenöffnung (28) hin in Schritten entsprechend von der Spritze (2) auszustoßender Flüssigkeitsvolumina, wobei
- die Einrichtungen eine Arbeitskammer (3) und eine Vorratskammer (4) aufweisen, die mit Hydraulikflüssigkeit befüllt sind, wobei
- in die Arbeitskammer (3) ein mit dem Spritzenkolben (24) verbundener Arbeitskolben (5) und ein von außen betätigbarer Betätigungskolben (7) abdichtend hineingeführt sind, wobei
- die Vorratskammer (4) ein veränderliches Vorratsvolumen aufweist und wobei
- die Arbeitskammer (3) und die Vorratskammer (4) durch eine Ventileinrichtung (12) verbunden sind, die beim Einschieben des Arbeitskolbens (5) in die Arbeitskammer (3), insbesondere beim Rückschieben des Spritzenkolbens (24), Hydraulikflüssigkeit aus der Arbeitskammer (3) in die Vorratskammer (4) durchläßt, die beim Einschieben des Betätigungskolbens (7) in die Arbeitskammer (3) diese von der Vorratskammer (4) abtrennt, damit die Hydraulikflüssigkeit den Arbeitskolben (5) zum Vorschieben des Spritzenkolbens (24) um einen Dosierschritt aus der Arbeitskammer (3) herausdrückt, und die beim Rückschieben des Betätigungskolbens (7) aus der Arbeitskammer (3) Hydraulikflüssigkeit aus der Vorratskammer (4) in die Arbeitskammer (3) durchläßt.

2. Pipettiersystem nach Anspruch 1, bei dem der Betätigungskolben (7) zwischen einem das Rückschieben begrenzenden ersten Anschlag (17) und einem das Einschieben begrenzenden zweiten Anschlag (18) bewegbar ist.

3. Pipettiersystem nach Anspruch 2, bei dem der Abstand zwischen erstem und zweitem Anschlag (17, 18) mittels einer Einstelleinrichtung (20) einstellbar ist.

4. Pipettiersystem nach Anspruch 3, bei dem der erste Anschlag (17) fest und der zweite Anschlag (18) einstellbar ist.

5. Pipettiersystem nach Anspruch 3 oder 4, bei dem die Einstelleinrichtung eine Mikrometereinrichtung (20) aufweist.

6. Pipettiersystem nach einem der Ansprüche 3 bis 5, bei dem die Einstelleinrichtung mit einer Anzeigeeinrichtung (21) gekoppelt ist.

7. Pipettiersystem nach Anspruch 6, bei dem die Anzeigeeinrichtung (21) ein Zählwerk aufweist.

8. Pipettiersystem nach einem der Ansprüche 1 bis 7, bei dem der Betätigungskolben (7) von einer Feder (37) in Rückschieberichtung beaufschlagt ist.

9. Pipettiersystem nach einem der Ansprüche 1 bis 8, bei dem das Vorratsvolumen der Vorratskammer (4) mittels einer flexiblen Vorratskammerwand (30), insbesondere in Form eines Faltenbalges, veränderlich ist.

10. Pipettiersystem nach einem der Ansprüche 1 bis 9, bei dem die Ventileinrichtung (12) ein Rückschlagventil (13, 14) aufweist, das in Strömungsrichtung von der Vorratskammer (4) in die Arbeitskammer (3) öffnet und in umgekehrter Strömungsrichtung schließt.

11. Pipettiersystem nach Anspruch 10, bei dem das Rückschlagventil ein Kugelrückschlagventil (13, 14) ist.

12. Pipettiersystem nach Anspruch 10 oder 11, bei dem die Ventileinrichtung (12) ein Rückschlagventil (13, 14) und ein von außen betätigbares Ventil (31) aufweist.

13. Pipettiersystem nach Anspruch 10 oder 11, bei der dem Rückschlagventil (12) eine von außen betätigbare Betätigungseinrichtung (15) zugeordnet ist.

14. Pipettiersystem nach einem der Ansprüche 1 bis 13, bei dem eine erste Arbeitskammer (3') und eine zweite Arbeitskammer (3") vorhanden sind, wobei der Arbeitskolben (5) in die erste Arbeitskammer (3') hineingeführt ist, die über ein Ventil (31) der Ventileinrichtung (12) mit der Vorratskammer (4) verbunden ist, wobei das Ventil (31) beim Einschieben des Arbeitskolbens (5) in die erste Arbeitskammer (3') Hydraulikflüssigkeit aus der ersten Arbeitskammer (3') in die Vorratskammer (4) durchläßt, wobei der Betätigungskolben (7) in die zweite Arbeitskammer (3") hineingeführt ist, die über ein weiteres Ventil (13, 14) der Ventileinrichtung (12) mit der Vorratskammer (4) verbunden ist, wobei das weitere Ventil (13, 14) beim Einschieben des Betätigungskolbens (7) in die zweite Arbeitskammer (3") diese von der Vorratskammer (4) trennt und beim Rückschieben des Betätigungskolbens (7) aus der zweiten Arbeitskammer (3") Hydraulikflüssigkeit aus der Vorratskammer (4) in die zweite Arbeitskammer (3") durchläßt, und wobei die Arbeitskammern (3', 3") untereinander durch eine weitere Ventileinrichtung (32) verbunden sind, die am Ende der Einschiebebewegung des Betätigungskolbens (7) schließt.

15. Pipettiersystem nach Anspruch 14, bei dem das die erste Arbeitskammer (3') und die Vorratskammer (4) verbindende Ventil (31) der Ventileinrichtung (12) ein von außen betätigbares Ventil (31) ist.

16. Pipettiersystem nach Anspruch 14 oder 15, bei dem das die zweite Arbeitskammer (3") und die Vorratskammer (4) verbindende weitere Ventil (13, 14) der Ventileinrichtung (12) ein Rückschlagventil ist, das in Strömungsrichtung von der Vorratskammer (4) zur zweiten Arbeitskammer (3") öffnet und in umgekehrter Richtung schließt.

17. Pipettiersystem nach einem der Ansprüche 14 bis 16, bei dem die weitere Ventileinrichtung (32) ein weiteres Rückschlagventil ist, das in Strömungsrichtung von der zweiten Arbeitskammer (3") zur ersten Arbeitskammer (3') öffnet und in umgekehrter Richtung schließt.

18. Pipettiersystem nach einem der Ansprüche 1 bis 17, das eine Einrichtung zur Resthubvermeidung aufweist, die einen weiteren Dosierschritt verhindert, wenn die in der Spritze (2) vorhandene restliche Flüssigkeitsmenge kleiner als die eingestellte Dosiermenge ist.

19. Pipettiersystem nach Anspruch 18, bei dem bei der Einrichtung zur Resthubvermeidung eine Einrichtung (39) zum Abtasten der Stellung des Arbeitskolbens (5) beim Rückschieben des Betätigungskolbens (7), eine Einrichtung (46, 47) zum Vergleichen des ermittelten Resthubes mit der eingestellten Dosiermenge sowie ein Ventil (31) zum Sperren einer weiteren Bewegung des Arbeitskolbens (5) bei unzureichendem Resthub vorhanden ist.

20. Pipettiersystem nach Anspruch 19, bei dem die Einrichtung (39) zum Abtasten mit einer mit dem Arbeitskolben (5) verbundenen Abtastmarke (23) zusammenwirkt und die Einrichtung (46, 47) zum Vergleichen mit einer mit der Einstelleinrichtung (20) verbundenen Einstellmarke (47) zusammenwirkt.

21. Pipettiersystem nach einem der Ansprüche 1 bis 20, bei dem eine Einrichtung zur Sicherung des Herausschiebens des Arbeitskolbens (5) aus der Arbeitskammer (3') um den eingestellten Dosierschritt vorhanden ist, die eine Rückbewegung des Betätigungskolbens (7) und/oder ein Öffnen der Ventileinrichtung (12) vor Abschluß des Dosierschrittes verhindert.

22. Pipettiersystem nach Anspruch 21, bei dem die Einrichtung zur Sicherung das Erreichen des zweiten Anschlages (18') durch den Betätigungskolben (7) als Indikator für den Abschluß des Dosierschrittes abtastet und erst bei Erreichen des zweiten Anschlages (18') den Betätigungskolben (7) für die Rückbewegung freigibt und/oder die Ventileinrichtung (12) entsperrt.

## Claims

1. A pipetting system comprising:
- a repeater pipette (1)
- a syringe (2) releasably connected thereto,
- wherein the repeater pipette (1) holds the syringe (2),
- and means to push the syringe piston (24) away from the syringe aperture (28) and to move the syringe piston (24) towards the syringe aperture (28) by steps depending on the liquid volumes requiring to be ejected from the syringe 2), wherein
- said means have a working chamber (3) and a storage chamber (4) which are filled with hydraulic liquid, wherein
- a working piston (5) connected to the syringe piston (24) and an actuating piston (7) adapted to be actuated from outside are sealingly introduced in the working chamber (3), wherein
- the storage chamber (4) has a variable stock volume, and wherein
- the working chamber (3) and the storage chamber (4) are interconnected by a valve means (12) which, while the working piston (5) is being pushed into the working chamber (3), especially while the syringe piston (24) is pushed back, allows a hydraulic fluid to pass from the working chamber (3) to the storage chamber (4) and which, while the actuating piston (7) is pushed into the working chamber (3) separates the latter from the storage chamber (4) in order that the hydraulic liquid may force the working piston (5) out of the working chamber (3) by one proportioning step with a view to pushing the syringe piston (24) forward and, while the actuating piston (7) is pushed back from the working chamber (3), allows hydraulic liquid to pass from the storage chamber (4) to the working chamber (3).

2. The pipetting system according to claim 1 wherein the actuating piston (7) is adapted to be moved between a first stop (17) limiting the push-back travel and a second stop (18) limiting the pushing-in travel.

3. The pipetting system according to claim 1 wherein the spacing between the first and second stops (17, 18) may be adjusted by means of an adjustment means (20).

4. The pipetting system according to claim 3 wherein the first stop (17) is fixed and the second stop (18) is adjustable.

5. The pipetting system according to claim 3 or 4 wherein said adjustment means has a micrometer means (20).

6. The pipetting system according to any of claims 3 to 5 wherein said adjustment means is coupled to an indicator means (21).

7. The pipetting system according to claim 6 wherein the indicator means (21) has a counter mechanism.

8. The pipetting system according to any of claims 1 to 7 wherein the actuating piston (7) is biased by a spring (37) in the push-back direction.

9. The pipetting system according to any of claims 1 to 8 wherein the stock volume of the storage chamber (4) is variable by means of a flexible stock chamber wall (30), especially in the form of a corrugated bellows.

10. The pipetting system according to any of claims 1 to 9 wherein the valve means (12) has a check valve (13, 14) which opens in the direction of flow from the storage chamber (4) to the working chamber (3) and closes in the reverse direction of flow.

11. The pipetting system according to claim 10 wherein the check valve is a ball-check valve (13, 14).

12. The pipetting system according to claim 10 or 11 wherein the valve means (12) has a check valve (13, 14) and a valve (31) adapted to be actuated from outside.

13. The pipetting system according to claim 10 or 11 wherein an actuating means (15) adapted to be actuated from outside is associated with the check valve (12).

14. The pipetting system according to any of claims 1 to 13 wherein a first working chamber (3') and a second working chamber (3") exist, wherein the working piston (5) is introduced in the first working chamber (3') which is connected to the storage chamber (4) via a valve (31) of the valve means (12), wherein the valve (31), while the working piston (5) is pushed into the first working chamber (3'), allows hydraulic liquid to pass from the first working chamber (3') to the storage chamber (4), wherein actuating piston (7) is introduced in the second working chamber (3") which is connected to the storage chamber (4) via a further valve (13, 14) of the valve means (12), wherein the further valve (13, 14), while the actuating piston (7) is pushed into the second working chamber (3"), separates the latter from the storage chamber (4) and, while the actuating piston (7) is pushed back out of the second working chamber (3") allows hydraulic liquid to pass from the storage chamber (4) to the second working chamber (3"), and wherein the working chambers (3', 3") are interconnected by a further valve means (32), which closes upon completion of the push-in motion of the actuating piston (7).

15. The pipetting system according to claim 14 wherein the valve (31) of the valve means (12) which interconnects the first working chamber (3') and the storage chamber (4) is a valve (31) adapted to be actuated from outside.

16. The pipetting system according to claim 14 or 15 wherein the further valve (13, 14) of the valve means (12) which interconnects the second working chamber (3") and the storage chamber (4) is a check valve which opens in the direction of flow from the storage chamber (4) to the second working chamber (3") and closes in the reverse direction.

17. The pipetting system according to any of claims 14 to 16 wherein the further valve means (32) is a further check valve, which opens in the direction of flow from the second working chamber (3") to the first working chamber (3') and closes in the reverse direction.

18. The pipetting system according to any of claims 1 to 17 which has a means for avoiding a residual lift which prevents another proportioning step when the residual liquid volume existing in the syringe (2) is smaller than the proportioned volume adjusted.

19. The pipetting system according to claim 18 wherein the means for avoiding a residual lift is a means (39) for sensing the position of the working piston (5) while the actuating piston (7) is pushed back, a means (46, 47) for comparing the residual lift determined to the proportioned volume adjusted, and a valve (31) for blocking another motion of the working piston (5) when the residual lift is insufficient.

20. The pipetting system according to claim 19 wherein the means (39) for sensing interacts with a sensing mark (23) joined to the working piston (5) and the means (46, 47) for comparing interacts with a sensing mark (47) joined to the adjustment means (20).

21. The pipetting system according to any of claims 1 to 20 wherein there is a means for ensuring the push-out operation of the working piston (5) from the working chamber (3') by the proportioning step adjusted, which prevents the actuating piston (7) from moving back and/or the valve (12) from opening before the completion of the proportioning step.

22. The pipetting system according to claim 21 wherein the means for ensuring senses the achievement of the second stop (18') by the actuating piston (7) as an indication for completion of the proportioning step and releases the actuating piston (7) for its backward motion and/or unblocks the valve means (12) only when the second stop (18') is reached.

## Revendications

1. Système de pipetage, comportant :
- une pipette à répétition (1)
- et une seringue (2), lui étant reliée de façon désolidarisable,
- la pipette à répétition (1) maintenant la seringue (2),
- et comportant des dispositifs pour rappeler le piston de seringue (24) depuis l'ouverture de seringue (28) et pour avancer le piston de seringue (24) vers l'ouverture de seringue (28) par pas correspondant à des volumes de liquide à expulser par la seringue (2),
- les dispositifs présentant une chambre de travail (3) et une chambre de stockage (4), remplies de liquide hydraulique,
- un piston de travail (5) relié au piston de seringue (24) et un piston d'actionnement (7) susceptible d'être actionné depuis l'extérieur étant insérés de manière étanche dans la chambre de travail (3),
- la chambre de stockage (4) présentant un volume de stockage modifiable, et
- la chambre de travail (3) et la chambre de stockage (4) étant reliées par un dispositif de soupape (12) qui, lors de l'enfoncement du piston de travail (5) dans la chambre de travail (3), en particulier lors du rappel du piston de seringue (24), fait passer du liquide hydraulique venant de la chambre de travail (3) dans la chambre de stockage (4), qui, lors de l'enfoncement du piston d'actionnement (7) dans la chambre de travail (3), isole celle-ci de la chambre de stockage (4), de manière que le liquide hydraulique repousse le piston de travail (5) hors de la chambre de travail (3) pour avancer le piston de seringue (24) d'une distance correspondant à un pas de dosage, et qui, lors du rappel du piston d'actionnement (7) hors de la chambre de travail (3), fait passer du liquide hydraulique de la chambre de stockage (4) dans la chambre de travail (3).

2. Système de pipetage selon la revendication 1, dans lequel le piston d'actionnement (7) est déplaçable entre une première butée (17) limitant le rappel et une deuxième butée (18) limitant l'enfoncement.

3. Système de pipetage selon la revendication 2, dans lequel l'espacement entre la première et la deuxième butée (17, 18) est réglable à l'aide d'un dispositif de réglage (20).

4. Système de pipetage selon la revendication 3, dans lequel la première butée (17) est fixe, et la deuxième butée (18) est réglable.

5. Système de pipetage selon la revendication 3 ou 4, dans lequel le dispositif de réglage présente un dispositif micrométrique (20).

6. Système de pipetage selon l'une des revendications 3 à 5, dans lequel le dispositif de réglage est couplé à un dispositif d'affichage (21).

7. Système de pipetage selon la revendication 6, dans lequel le dispositif d'affichage (21) présente un compteur.

8. Système de pipetage selon l'une des revendications 1 à 7, dans lequel le piston d'actionnement (7) est sollicité par un ressort (37) dans la direction du rappel.

9. Système de pipetage selon l'une des revendications 1 à 8, dans lequel le volume de stockage de la chambre de stockage (4) est modifiable à l'aide d'une paroi de chambre de stockage (30) flexible, en particulier réalisée sous la forme d'un soufflet.

10. Système de pipetage selon l'une des revendications 1 à 9, dans lequel le dispositif de soupape (12) présente un clapet anti-retour (13, 14) qui s'ouvre dans la direction d'écoulement allant de la chambre de stockage (4) à la chambre de travail (3) et se ferme lorsque la direction de l'écoulement est dans le sens inverse.

11. Système de pipetage selon la revendication 10, dans lequel le clapet anti-retour est un clapet anti-retour à bille (13, 14).

12. Système de pipetage selon la revendication 10 ou 11, dans lequel le dispositif de soupape (12) présente un clapet anti-retour (13, 14) et une soupape (31) actionnable depuis l'extérieur.

13. Système de pipetage selon la revendication 10 ou 11, dans lequel un dispositif d'actionnement (15), actionnable depuis l'extérieur est associé au clapet anti-retour (12).

14. Système de pipetage selon l'une des revendications 1 à 13, dans lequel une première chambre de travail (3') et une deuxième chambre de travail (3") sont prévues, le piston de travail (5) étant inséré et guidé dans la première chambre de travail (3'), qui est reliée à la chambre de stockage (4) par une soupape (31) du dispositif à soupape (12), la soupape (31) laissant passer du liquide de la première chambre de travail (3') à la chambre de stockage (4) lors de l'enfoncement du piston de travail (5) dans la première chambre de travail (3'), le piston d'actionnement (7) étant inséré dans la deuxième chambre de travail (3'') reliée à la chambre de stockage (4) par une autre soupape (13, 14) du dispositif de soupape (12), l'autre soupape (13, 14) séparant celle-ci de la chambre de stockage (4), lors de l'enfoncement du piston d'actionnement (7) dans la deuxième chambre de travail (3"), et laissant passer du liquide hydraulique de la chambre de stockage (4) dans la deuxième chambre de travail (3") lors du rappel du piston d'actionnement (7) depuis la deuxième chambre de travail (3") , et les chambres de travail (3', 3") étant reliées l'une à l'autre par un autre dispositif de soupape (32), se fermant à la fin du mouvement d'enfoncement du piston d'actionnement (7).

15. Système de pipetage selon la revendication 14, dans lequel la soupape (31) reliant la première chambre de travail (3') et la chambre de stockage (4) du dispositif à soupape (12) est une soupape (31) actionnable depuis l'extérieur.

16. Système de pipetage selon la revendication 14 ou 15, dans lequel l'autre soupape (13, 14), du dispositif de soupape (12), reliant la deuxième chambre de travail (3") et la chambre de stockage (4), est un clapet anti-retour qui s'ouvre dans la direction d'écoulement allant de la chambre de stockage (4) vers la deuxième chambre de travail (3") et se ferme dans la direction d'écoulement inverse.

17. Système de pipetage selon l'une des revendications 14 à 16, dans lequel l'autre dispositif de soupape (32) est un autre clapet anti-retour qui s'ouvre dans la direction d'écoulement allant de la deuxième chambre de travail (3") à la première chambre de travail (3') et se ferme dans la direction inverse.

18. Système de pipetage selon l'une des revendications 1 à 17, présentant un dispositif d'empêchement de la course résiduelle, empêchant un pas de dosage supplémentaire, lorsque la quantité de liquide restant dans la seringue (2) est inférieure à la dose réglée.

19. Système de pipetage selon la revendication 18, dans lequel, dans le dispositif d'empêchement de la course résiduelle, est prévu un dispositif (39) pour détecter la position du piston de travail (5) lors du rappel du piston d'actionnement (7), un dispositif (46, 47) pour comparer la course résiduelle déterminée à la dose réglée, ainsi qu'une soupape (31) pour interdire un déplacement supplémentaire du piston de travail (5) lorsque la course résiduelle est insuffisante.

20. Système de pipetage selon la revendication 19, dans lequel le dispositif (39) de détection coopère avec une marque de détection (23) reliée au piston de travail (5), et dans lequel le dispositif (46, 47) de comparaison coopère avec une marque de réglage (47) reliée au dispositif de réglage (20).

21. Système de pipetage selon l'une des revendications 1 à 20, dans lequel un dispositif de sécurité est prévu, pour assurer le déplacement, de la valeur du pas de dosage réglé, du piston de travail (5) hors de la chambre de travail (3'), dispositif empêchant tout déplacement de rappel du piston d'actionnement (7) et/ou toute ouverture du dispositif de soupape (12) avant l'achèvement du pas de dosage.

22. Système de pipetage selon la revendication 21, dans lequel le dispositif de sécurité détecte l'arrivée à la deuxième butée (18') grâce au piston d'actionnement (7) servant et indicateur de l'achèvement du pas de dosage et, ensuite, lors de l'atteinte de la deuxième butée (18'), libère le déplacement de rappel du piston d'actionnement (7) et/ou débloque le dispositif de soupape (12).
